# EUROPEAN PATENT APPLICATION

(11) **EP 3 460 743 A1**
(43) Date of publication of application: **27.03.2019**
(21) Application number: 16915164.4
(22) Date of filing: 01.09.2016
(51) Int. Cl.: G06Q 50/18

(54) **SERVER DEVICE, COMMUNICATION METHOD, AND PROGRAM**

(71) Applicant: Goldip Inc., Tokyo 1000004 (JP)
(72) Inventor: SHIRASAKA, Hajime, Tokyo 108-0074 (JP); HARIMA, Rieko, Tokyo 108-0074 (JP)
(74) Representative: Epping - Hermann - Fischer
(86) International application number: PCT/JP2016/075711
(87) International publication number: WO 2018/042604

(57) **Abstract**

A problem arises in that it takes time and cost for an agent to ascertain information relating to an intellectual property procedure. A server device according to an embodiment of the present invention is characterized by comprising: a communication unit which receives information relating to intellectual property as transmitted from a user terminal that can be operated by a user; a generation unit which generates display data for displaying a chat room in which the user and an agent can exchange information; and a processing unit which transmits, via the communication unit to the user terminal, display data for displaying the chat room including the information relating to the intellectual property as received by the communication unit, wherein the processing unit notifies, via the communication unit, an agent terminal that can be operated by the agent, of at least part of the information relating to the intellectual property and included in the chat room.

## Description

### [Technical Field]

The present invention relates to a server device, a communication method, and a program for performing procedures related to intellectual property.

### [Description of Related Art]

Management apparatuses for centrally managing information on intellectual property have been developed. Patent Document 1 discloses an intellectual property management apparatus for storing information on intellectual property and managing deadlines and file wrappers of the intellectual property. When patent prosecution information is registered, the intellectual property management apparatus disclosed in Patent Document 1 automatically transmits and receives e-mails of inquiries related to the prosecution and automatically collects replies for the prosecution. Patent Document 1 discloses that the intellectual property management apparatus as above configured reduces burdens on a person engaged in the intellectual property management tasks and improves the efficiency of the intellectual property management tasks.

### [Prior Art Documents]

[Patent Document 1] Japanese Unexamined Patent Application Publication No. 2007-193847 (JP 2007-193847 A)

### [Summary of the Invention]

### [Object to be Achieved by the Present Invention]

The procedures of the intellectual property are often performed by an agent such as a patent attorney and a lawyer, and most procedures for a patent office and a court abroad need to be performed by a foreign agent. Accordingly, it is important for the agent to quickly and efficiently obtain information on the procedures of the intellectual property. However, information on the procedures for the patent office and the court abroad is often notified through a domestic agent to the foreign agent in most cases. This needs time and costs for the foreign agent to obtain the information on the procedures.

Regarding this, Patent Document 1 only discloses that the intellectual property management apparatus automatically transmits and receives e-mails of the inquiries related to the prosecution and automatically collects responses for the prosecution. That is, the intellectual property management apparatus fails to server to allow the agent to obtain the responses on the prosecution. Accordingly, the intellectual property management apparatus disclosed in Patent Document 1 fails to allow the agent to obtain the information on the procedures of the intellectual property, and thus fails to solve a problem in that the time and costs are needed for the agent to obtain the information on the procedures of the intellectual property.

An object of the present invention is to provide a server device, a communication method, and a program capable of reducing the time and costs needed for allowing an agent to obtain information on procedures related to intellectual property.

A server device according to an embodiment of the present invention may be characterized by comprising: a communication unit configured to receive information on intellectual property transmitted from a user terminal operable by a user; a generating unit configured to generate display data for displaying a chat room that allows the user and an agent to exchange information with each other; and a processing unit configured to transmit the display data for displaying the chat room including the information on the intellectual property received by the communication unit to the user terminal via the communication unit. The processing unit notifies at least a part of the information on the intellectual property included in the chat room to an agent terminal operable by the agent via the communication unit.

The server device according to an embodiment of the present invention may be characterized by further comprising an input receiving unit configured to receive a correction or an additional request for the information on the intellectual property from a manager capable of operating the server device, where the processing unit notifies the user terminal of the request received from the input receiving unit via the communication unit.

The server device according to an embodiment of the present invention may be characterized by further comprising an input receiving unit configured to receive a deadline of the information on the intellectual property from a manager capable of operating the server device, where the generating unit generates display data for displaying the deadline received from the input receiving unit in a calendar capable of managing the deadline of the information on the intellectual property.

The server device according to an embodiment of the present invention may be characterized in that the processing unit is configured to translate the information on the intellectual property into a certain foreign language on the basis of a certain rule in which an item specific to the information on the intellectual property is predetermined and a translation model that has statistically machine learned a past translation result.

The server device according to an embodiment of the present invention may be characterized in that in a case where certain information on a moving image received from the user terminal in advance is consistent with information included in a certain moving image disclosed on a network, the processing unit notifies the user terminal of the certain information on the moving image.

The server device according to an embodiment of the present invention may be characterized in that the predetermined information corresponds to information on a change in color included in the moving image or information on a sound included in the moving image, and when the certain moving image published on the network includes the information on the change in color included in the moving image or the information on the sound included in the moving image, the processing unit notifies the user terminal of the information on the certain moving images.

The server device according to an embodiment of the present invention may be characterized in that the processing unit is capable of creating information on the intellectual property based on a question asked by the manager that is capable of operating the server device and an answer of the user to the question on the chat room.

The server device according to an embodiment of the present invention may be characterized in that the processing unit searches for a prior art document related to the information on the intellectual property on the basis of the information on the intellectual property received from the user terminal, and the generating unit generates display data for displaying a relevance between the prior art document searched by the processing unit and the information on the intellectual property on a map.

The server device according to an embodiment of the present invention may be characterized in that the generating unit is configured to generate display data for displaying certain information set by each of a plurality of agents, and the processing unit is configured to notify at least a part of the information on the intellectual property to an agent terminal operable by one of the agents selected by the user based on the certain information.

A communication method according to an embodiment of the present invention may be characterized by comprising the steps of: a first step of receiving information on intellectual property transmitted from a user terminal operable by a user; a second step of generating display data for displaying a chat room allowing the user and an agent to exchange information with each other; a third step of transmitting display data for displaying the chat room including the received information on the intellectual property to the user terminal; and a fourth step of notifying at least a part of the information on the intellectual property included in the chat room to an agent terminal operable by the agent.

A program according to an embodiment of the present invention may be characterized by causing a computer to execute: a first function of receiving information on intellectual property transmitted from a user terminal operable by a user; a second function of generating display data for displaying a chat room allowing the user and an agent to exchange information with each other; a third function of transmitting display data for displaying the chat room including the received information on the intellectual property to the user terminal; and a fourth function of notifying at least a part of the information on the intellectual property included in the chat room to an agent terminal operable by the agent.

### [Effect of the Invention]

The present invention reduces time and costs needed for an agent to obtain information on procedures of intellectual property.

### BRIEF DESCRIPTION OF THE DRAWINGS

FIG. 1 is a diagram for illustrating flows of procedures in a foreign country according to a first embodiment of the present invention;
FIG. 2 is a diagram illustrating a configuration example of an intellectual property system according to the first embodiment of the present invention;
FIG. 3 is a diagram illustrating a configuration example of a server device according to the first embodiment of the present invention;
FIG. 4 is a diagram illustrating a configuration example of a user terminal according to the first embodiment of the present invention;
FIG. 5 is a schematic diagram illustrating an example of a top screen according to the first embodiment of the present invention;
FIG. 6 is a schematic diagram illustrating an example of a main screen according to the first embodiment of the present invention;
FIG. 7 is a schematic diagram illustrating an example of a calendar screen according to the first embodiment of the present invention;
FIG. 8 is a schematic diagram illustrating an example of a folder screen according to the first embodiment of the present invention;
FIG. 9 is a schematic diagram illustrating an example of a liaison screen according to the first embodiment of the present invention;
FIG. 10 is a schematic diagram illustrating an example of a procedure flow screen according to the first embodiment of the present invention;
FIG. 11 is a sequence diagram illustrating an operation example of the intellectual property system according to the first embodiment of the present invention;
FIG. 12 is a diagram illustrating a configuration example of an intellectual property system according to a second embodiment of the present invention;
FIG. 13 is a diagram illustrating a configuration example of a server device according to the second embodiment of the present invention;
FIG. 14 is a diagram illustrating a configuration example of the server device according to the second embodiment of the present invention; and
FIG. 15 is a flowchart illustrating an operation example of the server device according to the second embodiment of the present invention.

### DETAILED DESCRIPTION OF EMBODIMENTS

### First Embodiment

A first embodiment of the present invention will be described with reference to the drawings.

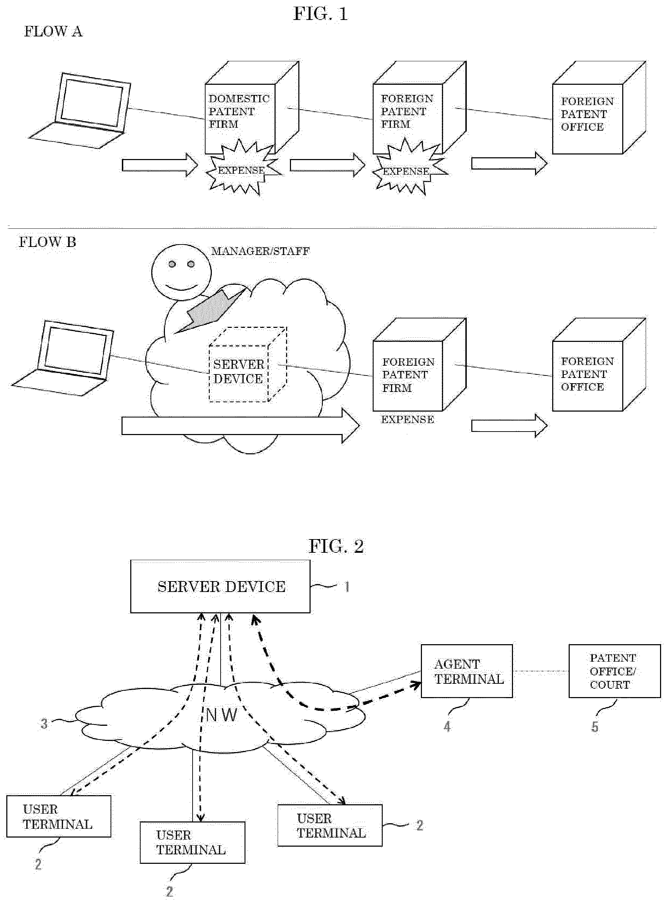

FIG. 1 is a diagram for illustrating flows of procedures in a foreign country. The flow A in FIG. 1 is a diagram for illustrating a flow of conventional procedures. A user that wishes to perform procedures with a foreign patent office or a court exchanges information on the procedures with an agent (a patent attorney or a lawyer) of a foreign patent firm through a domestic patent firm or a law firm to perform the procedures with the foreign patent office or the court. Although FIG. 1 illustrates the flow of the procedures in a foreign country as an example, the first embodiment of the present invention is applicable to not only the procedures in a foreign country but also the domestic procedures.

The user may be a natural person or a corporation. The term domestic is directed to a country where the user's address or residence is present. The phrase foreign country is directed to a country other than the country where the user's address or residence is present.

As shown in the flow A of FIG. 1, first, the user uses a user terminal 2, for example, to exchange the information on the procedures for the foreign patent office or the court with the staff of the domestic patent firm or the law firm. For example, when the user files a patent application in a foreign country, regarding the invention according to the patent application, the user first exchanges information on the invention with the staff of the domestic patent firm or the law firm.

The staff of the domestic patent firm or the law firm then transfers the information on the procedures exchanged with the user to the foreign patent firm or the law firm. For example, the domestic patent firm or the law firm translates the information on the patent application exchanged with the user to a local language such as English and transfers the translated information to the foreign patent firm or the law firm. The transfer may be performed by using an e-mail, facsimile, and a telephone, for example, or through a meeting in person.

The agent (a patent attorney or a lawyer) of the foreign patent firm or the law firm then performs the procedures as an agent for a foreign patent office or a court. For example, the foreign patent firm or the law firm files a patent application as an agent with the foreign patent office.

As described above, when the user performs the procedures for the foreign patent office or the court, the user exchanges information on the procedures with the foreign patent firm or the law firm through the domestic patent firm or the law firm to perform the procedures for the foreign patent office or the court.

Accordingly, the user pays expenses to the foreign patent firm or the law firm as a compensation for the agent of the procedures for the foreign patent office or the court. In addition, the user also pays expenses to the domestic patent firm or the law firm as a compensation for the exchange and the translation of the information on the procedures.

The user must perform the procedures for the foreign patent office or the court through the foreign lawyer or the patent attorney, and exchange the information on the procedures with the agent (a lawyer or a patent attorney) of the foreign patent firm or the law firm. Accordingly, the user needs to pay expenses as a compensation for the agent to the foreign patent firm or the law firm.

However, when the user performs the procedures with the foreign patent office or the court, the user need not perform the procedures through the domestic patent firm or the law firm. When the user performs the procedures without going through the domestic patent firm or the law firm, the user need not pay expenses to the domestic patent firm or the law firm.

The first embodiment of the present invention thus provides an intellectual property system 100 that allows the user to exchange the information on the procedures directly with the agent of the foreign patent firm or the law firm. As described above, the intellectual property system 100 according to the first embodiment of the present invention is applicable to not only the foreign agent but also the domestic agent.

The flow B in FIG. 1 is an example of a case where a user performs procedures with a foreign patent office or a court by using the intellectual property system 100 according to the first embodiment of the present invention. The user exchanges information on the procedures directly with the agent of the patent firm or the law firm through a server device 1 included in the intellectual property system 100. The procedures are related to intellectual property, for example, and specifically to procedures such as a patent application, a design registration application, a trademark registration application, and a prosecution related to such applications. Further, the procedure may be related to a lawsuit associated with intellectual property. Moreover, the procedures need not be related to the intellectual property. The procedures may correspond to any procedures.

The agent (a patent attorney or a lawyer) of the patent firm or the law firm performs the procedures as an agent with the patent office or the court based on the information on the procedures exchanged directly with the user.

This allows the user, for example, as illustrated in the example of the flow B in FIG. 1, to perform the procedures with the foreign patent office or the court without going through the domestic patent firm or the law firm. Accordingly, the user need not pay expenses for the domestic patent firm and the law firm paid in the flow A. This reduces the costs needed for the user to perform the procedures with the foreign patent office or the court.

In contrast, in the flow B, since the user exchanges the information directly with the foreign agent, the foreign agent may inform the user of information where the user fails to know how to deal with the information. Further, the information that the user notifies the foreign agent may be insufficient in contents or the contents may be incorrect. In such cases, in the flow B, the manager or the staff of the server device 1, or the server device 1 automatically checks the information received from the user or the foreign agent, and when the information is insufficient or incorrect, notifies and requests the user to correct or add the contents. Moreover, of the information received from the foreign agent, for the information that is considered to be hard for the user to recognize how to deal with, information for describing the information or the way to deal with the information to be performed by the user may be added to the information and transmitted to the user terminal 2. This allows the user to perform the procedures smoothly and quickly.

The intellectual property system 100 according to the first embodiment of the present invention also reduces the costs for translation of the information on the procedures by, for example, employing a translation service provided at a lower cost than in the case where the translation is requested to the patent firm or the law firm. In the intellectual property system 100, the translation service provides a translation suitable for intellectual property, achieving an accurate translation of wordings and expressions specific to the intellectual property. This reduces or eliminates the costs and time needed for the user to correct the translated documents.

### Configuration of Intellectual Property System 100

FIG. 2 is a diagram illustrating a configuration example of the intellectual property system 100 according to the first embodiment. As shown in FIG. 2, the intellectual property system 100 includes a server device 1, a user terminal 2, a network (NW) 3, and an agent terminal 4. The agent terminal 4 connects to a certain terminal of the patent office or the court.

The server device 1 connects to the user terminal 2 via the NW 3 and provides the services of the intellectual property system 100 to the user terminal 2. The server device 1 may include a server device or a computer (e.g., a desktop, a laptop, and a tablet), for example. In the first embodiment of the present invention, the server device 1 is not limited to these.

The server device 1 also connects to the agent terminal 4 via the NW 3. The server device 1 transfers the information received from the user terminal 2 to the agent terminal 4. For example, the server device 1 receives information on a patent application from the user terminal 2 and transfers the information on the patent application to the agent terminal 4 via the NW 3. Further, the server device 1 transfers the information received from the agent terminal 4 to the user terminal 2.

Further, the server device 1 transmits new information obtained by modifying, changing, or updating the information that has been received from the user terminal 2 to the agent terminal 4. For example, the manager of the server device 1 (intellectual property system 100), the staff of a company or a corporation that provides intellectual property services using the server device 1, or the server device 1 automatically receives the information from the user terminal 2, and when certain items are insufficient in the information, the manager or the staff supplements the information with the insufficient items and transmits the information to the agent terminal 4. Further, when the information received from the user terminal 2 is incorrect, the manager or the staff, or the server device 1 automatically modifies the information to be correct and transmits the information to the agent terminal 4.

Also, when the manager or the staff, or the server device 1 automatically considers that the information received from the user terminal 2 to be insufficient or incorrect to be notified to the agent, the manager or the staff, or the server device 1 automatically requests the user to correct or add the contents of the information via the user terminal 2.

Further, the server device 1 transfers new information obtained by translating the information on the patent application received from the user terminal 2 to the agent terminal 4.

In the same manner, the server device 1 transmits new information to the user terminal 2, which new information is obtained by the manager or the staff of the server device 1, or the server device 1 automatically modifying, changing, or updating the information that has been received from the agent terminal 4.

Further, the server device 1, of the information received from the agent terminal 4, determines information that is considered to be hard to be recognized by the user, and notifies text information for illustrating the contents of the determined information that the server device 1 wishes the user to deal with to the user terminal 2 as well as the information received from the agent terminal 4.

As described above, in the intellectual property system 100 according to the first embodiment of the present invention, the manager of the server device 1 or the staff of the company or the corporation that provides intellectual property services using the server device 1, or the server device 1 automatically checks the information received from the user terminal 2, and when the information is insufficient or incorrect, prompts the user to modify, change, or add the contents of the information. Further, of the information received from the agent terminal 4, when information that the user may recognize hard to deal with is detected, information for illustrating the meaning and the contents of the information is added and notified to the user terminal 2 as well as the received information. In this way, in the intellectual property system 100, the manager or the staff of the server device 1, or the server device 1 automatically provides a service such as a concierge that supports the user on the information on the procedures. Such a service may be referred to as IP concierge.

Further, the server device 1 provides various services included in the intellectual property system 100 in response to requests received from the user terminal 2. For example, the server device 1 receives a request for using the calendar function from the user terminal 2 and provides the calendar function to the user terminal 2. Moreover, the server device 1, for example, receives a request for using the TV conference function from the user terminal 2 and provides the TV conference function to the user terminal 2.

The server device 1 may be located anywhere as long as it connects to the user terminal 2 and the agent terminal 4 via the NW 3. In the example in FIG. 2, although the intellectual property system 100 includes one server device 1, the intellectual property system 100 may include a plurality of server devices 1.

The user terminal 2 corresponds to a device that connects to the server device 1 via the NW 3 and transmits information on the procedures to the server device 1. The user terminal 2 may include a computer (e.g., a desktop, a laptop, and a tablet), a smartphone, a cell phone (e.g., a feature phone), a personal digital assistant (PDA), and a wearable terminal. In the first embodiment of the present invention, the user terminal 2 is not limited to these.

The user terminal 2 transmits various pieces of information received from the user to the server device 1. The user terminal 2, for example, transmits the information on the procedures received from the user to the server device 1. The user terminal 2, for example, receives information on a patent application to be filed in a foreign country from the user and transmits the information on the patent application to the server device 1. The user terminal 2, for example, receives and transmits information on the invention to the server device 1. The information that the user terminal 2 transmits to the server device 1 is not limited to information on the procedures, and may be any information.

The NW 3 connects the server device 1 with the user terminal 2, and the server device 1 with the agent terminal 4 to provide a connection path through which data is mutually transmitted and received.

The NW 3 corresponds to a wired network or a wireless network and may include an intranet, an extranet, a virtual private network (VPN), a local area network (LAN), a wide area network (WAN), Internet, a public switched telephone network (PSTN), integrated service digital networks (ISDNs), wireless LANs, long term evolution (LTE) code division multiple access (CDMA), Bluetooth (registered trademark), and satellite communication. In the first embodiment of the present invention, the NW 3 is not limited to these.

The agent terminal 4 corresponds to a device that connects to the server device 1 via the NW 3 and receives information that has been transmitted by the user of the user terminal 2 from the server device 1. The agent terminal 4, for example, may include a computer (for example, a desktop, a laptop, and a tablet), a smartphone, a cell phone (e.g., a feature phone), a personal digital assistant (PDA), and a wearable terminal. In the first embodiment of the present invention, the agent terminal 4 is not limited to these.

The agent terminal 4 may also serve to file a document with the foreign patent office or the court, which document has been formed based on the information on the procedures received from the server device 1 to be submitted to the foreign patent office or the court. In the foreign patent firm or the law office, the agent terminal 4 that receives information on the procedures from the server device 1 and a device for filing a document with the foreign patent office or the court may be independently provided.

### Configuration of Server Device

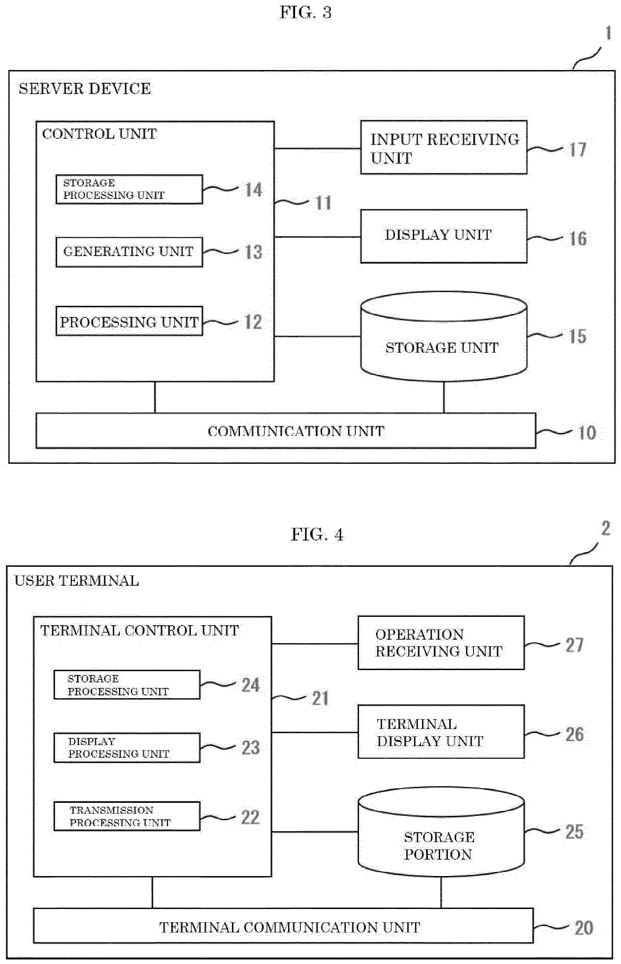

FIG. 3 is a block diagram illustrating a configuration example of the server device 1. As shown in FIG. 3, the server device 1 includes a communication unit 10, a control unit 11, a storage unit 15, a display unit 16, and an input receiving unit 17.

The communication unit 10 transmits and receives certain information via the NW 3. Communications of the communication unit 10 may be performed by either wired or wireless, and any communication protocol may be used as long as mutual communication is performed. The communication unit 10 connects to the user terminal 2 and transmits and receives the information on the procedures. Further, the communication unit 10 connects to the agent terminal 4 and transmits and receives information related to the procedures. The communication unit 10 transmits and receives certain information according to an instruction from the control unit 11. Further, the communication unit 10 transmits certain information received from the user terminal 2 and the agent terminal 4 to the control unit 11 and the storage unit 15.

The control unit 11 that performs a function embodied by a code or a command included in the program may include a central processing unit (CPU), a microprocessor, a processor core, a multiprocessor, an application-specific integrated circuit (ASIC), and a field programmable gate array (FPGA), for example. In the present invention, the control unit 11 is not limited to these.

As shown in FIG. 3, the control unit 11 includes a processing unit 12, a generating unit 13, and a storage processing unit 14.

The processing unit 12 performs a certain process in response to certain information received from the user terminal 2 or the agent terminal 4. For example, when the processing unit 12 receives the information on the procedures from the user terminal 2, the processing unit 12 instructs the generating unit 13 to generate display data for displaying the information on the procedures on the display unit 16. Further, for example, when the processing unit 12 receives the information on the procedures from the user terminal 2, the processing unit 12 instructs the storage processing unit 14 to store the received information on the procedures in the storage unit 15. Also, when the processing unit 12 receives the information on the procedures from the user terminal 2, for example, the processing unit 12 performs processes for transferring the received information on the procedures through the communication unit 10 to the agent terminal 4.

Further, in response to the request received from the user terminal 2, the processing unit 12 performs processes for providing a service corresponding to the request. When the processing unit 12 receives a request to use the TV conference function from the user terminal 2, for example, the processing unit 12 performs a process for using the TV conference function. When the processing unit 12 receives a request to use the TV conference function from the user terminal 2, for example, the processing unit 12 instructs the generating unit 13 to generate display data for displaying a screen display for a TV conference.

The processing unit 12 instructs the generating unit 13 to generate display data for displaying various types of text information entered by the user using the user terminal 2. Further, the processing unit 12 instructs the generating unit 13 to generate display data for displaying the text information received from the input receiving unit 17. The text information received from the input receiving unit 17 corresponds to, for example, text information for a manager (owner) of the server device 1 to respond to the text information and the information on the procedures received from the user terminal 2. The processing unit 12 may automatically respond to the text information and the information on the procedures received from the user terminal 2.

Also, the processing unit 12 instructs the generating unit 13 to generate display data for displaying text information and information on the procedures received from the agent terminal 4. Further, for example, when the processing unit 12 receives the information on the procedures from the agent terminal 4, the processing unit 12 instructs the storage processing unit 14 to store the received information on the procedures in the storage unit 15.

The processing unit 12 transmits the display data generated by the generating unit 13 to the user terminal 2 and/or the agent terminal 4 via the communication unit 10. This allows the user terminal 2 and/or the agent terminal 4 to display various screen displays generated by the generating unit 13.

The processes of the processing unit 12 are not limited to the above examples. The processing unit 12 performs processes for providing various services included in the intellectual property system 100.

In accordance with the instruction from the processing unit 12, the generating unit 13 generates display data for displaying the screen display. The generating unit 13 transmits the generated display data to the user terminal 2 and/or the agent terminal 4 via the communication unit 10. Also, the generating unit 13 writes the display data in the frame buffer and displays it on the display unit 16.

The generating unit 13, for example, generates display data for displaying the text information and the information on the procedures received from the user terminal 2 or the agent terminal 4 in a chat room. Also, the generating unit 13 generates display data for displaying a screen display for performing a TV conference, for example. The present invention is not limited to these examples. The display unit 13 generates various display data to be displayed on the user terminal 2, the agent terminal 4, and the display unit 16.

The storage processing unit 14 stores the information received from the user terminal 2 or the agent terminal 4 in the storage unit 15 based on the instruction from the processing unit 12. The storage processing unit 14 stores the information on the patent application from the user terminal 2 or the agent terminal 4 in the storage unit 15 based on the instruction from the processing unit 12.

The storage processing unit 14, for example, stores the information received from the user terminal 2 in the storage unit 15 for each user terminal 2. The storage processing unit 14, for example, stores the information received from each of the user terminals 2 in different areas of the storage unit 15. The storage processing unit 14 stores the information received from one of the user terminals 2 in the storage unit 15 in a manner in which the other user terminals 2 cannot access the information received from the one of the user terminals 2.

The storage unit 15 has a function of storing various programs and various data needed for operations of the server device 1. Further, the storage unit 15 stores the information received from the user terminal 2 based on the instruction from the storage processing unit 14. The storage unit 15 is embodied by various storage media such as an HDD, an SSD, and a flash memory. However, in the first embodiment of the present invention, the storage unit 15 is not limited to these.

The display unit 16 displays a certain screen display in accordance with the display data written in the frame buffer. The display unit 16 is embodied by a device that displays data such as images and text information, which device may include a monitor (a liquid crystal display and an organic electroluminescence display OELD) and a head mounted display (HMD). In the first embodiment of the present invention, the display unit 16 is not limited to these.

The input receiving unit 17 receives various operations on the server device 1. The input receiving unit 17, for example, receives an input from the manager (owner) of the server device 1 and transmits the information on the input to the control unit 11. The input receiving unit 17 may include, for example, a hardware key such as a touch panel and a keyboard typically, a pointing device such as a mouse, a camera (operation input via a moving image), and a microphone (operation input by voice). However, in the first embodiment of the present invention, the input receiving unit 17 is not limited to these.

The manager or the staff of the server device 1 enters information to be notified to the user or the foreign agent through the input receiving unit 17. The intellectual property system 100 checks the information received from the user terminal 2, and when the information is insufficient or incorrect, the intellectual property system 100 prompts the user to modify, change, or add the contents of the information. Further, of the information received from the agent terminal 4, when information that the user may recognize hard to deal with is detected, information for illustrating the meaning and the contents of the information is added and notified to the user terminal 2 as well as the received information. Such information that the manager or the staff notifies the user is entered through the input receiving unit 17 to the server device 1.

### Configuration of User Terminal 2 and Agent Terminal 4

FIG. 4 is a block diagram illustrating a configuration example of the user terminal 2. As shown in FIG. 4, the user terminal 2 includes a terminal communication unit 20, a terminal control unit 21, a storage portion 25, a terminal display unit 26, and an operation receiving unit 27. The agent terminal 4 has the same configuration as that of the user terminal 2. In the following, a configuration of the user terminal 2 will be described as an example. Since the configuration of the agent terminal 4 is the same as that of the user terminal 2, a detailed description thereof will be omitted.

The terminal communication unit 20 transmits and receives certain information via the NW 3. Communications of the terminal communication unit 20 may be performed by either wired or wireless, and any communication protocol may be used as long as mutual communication is performed. The terminal communication unit 20 connects to the server device 1 and transmits and receives certain information.

The terminal control unit 21 may include a central processing unit, a microprocessor, a processor core, a multiprocessor, an ASIC, and an FPGA, for example, that perform functions embodied by codes or instructions included in the program. In the present invention, the control unit 21 is not limited to these.

As shown in FIG. 4, the terminal control unit 21 includes a transmission processing unit 22, a display processing unit 23, and a storage processing unit 24.

The transmission processing unit 22 transmits, for example, the text information received from the operation receiving unit 26 through the terminal communication unit 20 to the server device 1. Further, the transmission processing unit 22 transmits various requests received from the operation receiving unit 27 to the server device 1.

The display processing unit 23 performs processes for displaying the display data received from the server device 1 on the terminal display unit 26. The display processing unit 23, for example, performs processes for displaying display data for displaying the text information received from the server device 1 on the terminal display unit 26. The display processing unit 23 writes the display data in the frame buffer and displays it on the terminal display unit 26.

The storage processing unit 24 performs processes for storing the text information and the information on the procedures received from the server device 1 in the storage portion 25.

The terminal display unit 26 displays a certain screen display according to the display data written in the frame buffer. The terminal display unit 26 is embodied by a device that displays data including images and text information, which device may include a monitor (liquid crystal display or an OELD) and a head mounted display (HMD), for example. In the first embodiment of the present invention, the terminal display unit 26 is not limited to these.

The operation receiving unit 27 receives various operations on the user terminal 2. The operation receiving unit 27, for example, receives an input from the user and transmits the information on the input to the transmission processing unit 22. The operation receiving unit 27 may include, for example, a hardware key such as a touch panel and a keyboard typically, a pointing device such as a mouse, a camera (operation input via a moving image), and a microphone (operation input by voice). However, in the first embodiment of the present invention, the operation receiving unit 27 is not limited to these.

The storage portion 25 has a function of storing various programs and various data needed for operations of the user terminal 2. Also, the storage portion 25 stores the information received from the server device 1 based on the instruction from the storage processing unit 24. The storage portion 25 is embodied by various storage media such as an HDD, an SSD, and a flash memory. However, in the first embodiment of the present invention, the storage portion 25 is not limited to these.

The terminal display unit 26 displays a certain screen display according to the display data written in the frame buffer. The terminal display unit 26 is embodied by a device that displays data including images and text information, which device may include a monitor (liquid crystal display or an OELD) and a head mounted display (HMD), for example. In the first embodiment of the present invention, the terminal display unit 26 is not limited to these.

The operation receiving unit 27 receives various operations on the user terminal 2. For example, the operation receiving unit 27 receives an input from the user and transmits the information on the input to the terminal control unit 21. The operation receiving unit 27 may include, for example, a hardware key such as a touch panel and a keyboard typically, a pointing device such as a mouse, a camera (operation input via a moving image), and a microphone (operation input by voice). However, in the first embodiment of the present invention, the operation receiving unit 27 is not limited to these.

### Screen Display

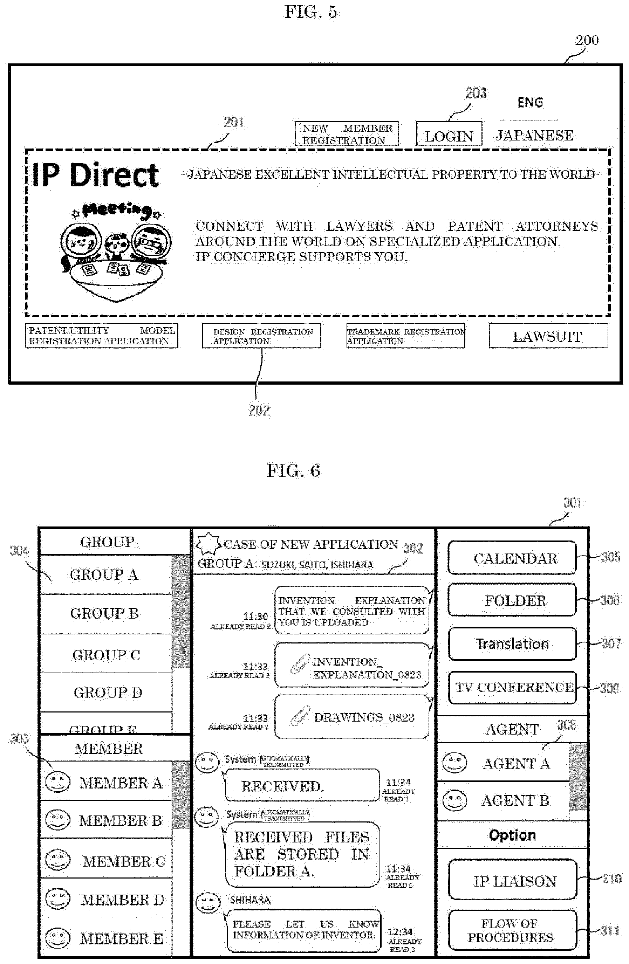

FIGS. 5 to 9 are schematic diagrams illustrating examples of screen displays displayed on the terminal display unit 26 of the user terminal 2 based on the display data generated by the generating unit 13 of the server device 1.

FIG. 5 shows a top screen 200 on the web page for providing the services of the intellectual property system 100 by the server device 1. As shown in FIG. 5, the top screen 200 includes an explanation area 201 introducing the intellectual property system 100 and icons 202 corresponding to the various services.

The explanation area 201 includes information for introducing the various services provided by the intellectual property system 100 with texts and illustrations. Further, the explanation area 201 may include link information to a home page HP in which the description illustrating the intellectual property system 100 is made. Clicking the link information by the user allows the user to move to the HP. The explanation area 201 is not limited to these examples. Any information such as how to use the intellectual property system 100 may be posted.

Further, the top screen 200 includes the icons 202 corresponding to the various services provided by the intellectual property system 100. The various services may include, for example, a patent application, a design registration application, a trademark application, and a lawsuit. Clicking the icon 202 corresponding to one of the various services included in the top screen 200 by the user allows the user to move to the page for the service corresponding to the icon 202. The intellectual property system 100 may be configured such that clicking the icon 202 corresponding to one of the various services allows the user to move to a login screen for logging in the intellectual property system 100.

The top screen 200 may include an icon 203 corresponding to link information for a user to move to a page for logging in the intellectual property system 100. The user clicks the icon 203 included in the top screen 201, moves to a login screen (not shown), enters data such as a user ID and a password, and logs in the intellectual property system 100. After logging in the intellectual property system 100, the user selects (clicks) one of the icons 202 corresponding to the various services provided by the intellectual property system 100 on the top screen 200 displayed after the login, allowing the user to move to a page for providing the service corresponding to the icon 202.

The top screen 201 may include various information and icons other than the above examples.

FIG. 6 shows a main screen 301 of the intellectual property system 100. The main screen 301 is provided for each of the services (such as a patent application and a design registration application.) provided by the intellectual property system 100. The main screen 301 may be provided not for each of the services but for each of the users.

The main screen 301 includes a chat room 302 for exchanging information with other users, foreign agents, and a manager of the intellectual property system 100, for example. The chat room corresponds to an area that displays various information notified by the user, the other users, the foreign agents, and the manager of the intellectual property system 100, for example, through the user terminal 2 and the agent terminal 4 to the server device 1. The chat room displays information notified by the user, for example, for each of time sequences.

In the example in Fig. 6, the chat room 302 shows text information such as "The invention explanation that we consulted with you is uploaded." and information on procedures such as invention_explanation_0823 and drawings_0823.

Also, the chat room 302 shows, in association with the displayed information, information indicating the time when the information has been displayed, and "already read", which serves as information indicating whether the other users have viewed the information. The phrase "already read" indicates that the information displayed in the chat room 302 has been displayed on a terminal other than the user terminal 2 or the agent terminal 4 through which the information had been transmitted. For example, in the case where one user terminal 2 transmits text characters "The invention explanation that we consulted with you is uploaded.", the phrase "already read" is displayed in response to a fact that another user terminal 2 has displayed the text characters "The invention explanation that we consulted with you is uploaded." When a plurality of the users, for example, is participating in the chat room 302, the number of the user terminals 2 on which the target information has been displayed is displayed around the phrase "already read."

The chat room 302 may also display information indicating that the server device 1 has automatically responded to the information from the user terminal 2. In the example of FIG. 6, the server device 1 automatically makes responses such as "Received" or "The received files are stored in the folder A."

In the chat room 302, the manager or the staff of the server device 1 checks the information received from the user terminal 2 and prompts the user to correct or add the contents of the information when the manager or the staff recognizes that the contents are insufficient or incorrect. For example, in the example of FIG. 6, ISHIHARA, that is the manager or the staff of the server device 1 checks the invention_explanation_0823" and the "drawings_0823" received from the user terminal 2, and if the manager or the staff recognizes that the "inventor information" is missing, the manager or the staff displays "Please let us know the information of the inventor," which corresponds to information for requesting the user to add the contents of the insufficient information.

The main screen 301 may include an icon 303 corresponding to another user related to the user. The user selects the icon 303 corresponding to the other user on the main screen 301 and allows the selected other user to participate in the chat room 302. For example, the user selects the icon 303 corresponding to the user A as the other user, and allows the user A to participate in the chat room 302. This allows the other user that has participated in the chat room 302 to enter (upload) the text information and the information on the procedures in the chat room 302. The main screen 301 may include an icon 303 corresponding to each of a plurality of other users. The icons 303 that cannot be displayed on the main screen 301 are displayed by the user scrolling the area where the icons 303 are displayed on the main screen 301.

When the user selects the icon 303 corresponding to the other user on the main screen 301, the chat room 302 for exchanging certain information with the other user corresponding to the selected icon 303 is displayed in the area in which the chat room 302 is to be displayed. This allows the user to exchange the certain information with the other user corresponding to the selected icon 303 using the displayed chat room 302.

The main screen 301 may include an icon 304 corresponding to a group including a plurality of users or foreign agents. The user transmits and receives text information and the information on the procedures with the users and the foreign agents that belong to the group in the chat room 302. Selecting the icon 304 included in the main screen 301 allows the user to determine the group to exchange various information using the chat room 302. The main screen 301 may include icons 304 corresponding to a plurality of groups. The icons 304 that cannot be displayed on the main screen 301 are displayed by the user scrolling the area where the icons 304 are displayed on the main screen 301.

When the user selects the icon 304 corresponding to the group on the main screen 301, the chat room 302 for exchanging certain information with the users and the foreign agents that belong to the group corresponding to the selected icon 304 is displayed in the area in which the chat room 302 is to be displayed. This allows the user to exchange the certain information with the users and the foreign agents that belong to the group corresponding to the selected icon 304 using the displayed chat room 302.

The main screen 301 may include an icon 305 corresponding to the calendar function. For the calendar function, for example, a calendar function provided at a low price or free of charge may be used. When the user selects the icon 305 corresponding to the calendar function, the user moves to a calendar screen 401, which displays the calendar.

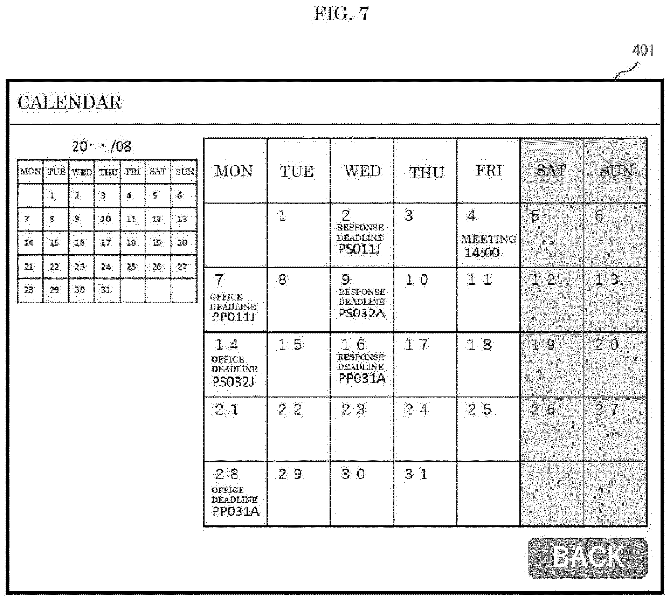

FIG. 7 is a schematic diagram illustrating a configuration example of the calendar screen 401. As shown in FIG. 7, the calendar screen 401 displays the calendar on which various schedules related to the user are displayed. As shown in FIG. 7, the calendar screen 401 displays the contents of the procedures and the deadlines thereof for the foreign patent office. For example, the calendar screen 401 displays that August 7 (Monday) is the deadline of the procedure for the case PP011J to be filed with the patent office. Further, the calendar screen 401 displays, for example, that August 4 (Friday) 14:00 corresponds to the schedule of the meeting.

In the intellectual property system 100, the schedules such as the deadline to be displayed on the calendar screen 401 are entered by the user on the calendar screen 401. Further, the manager or the staff of the server device 1 may enter the schedules such as the deadline to be displayed on the calendar screen 401. For example, when the server device 1 receives the information from the agent terminal 4 abroad, the manager or the staff of the server device 1 may check the information, check the deadline to be filed with the foreign patent office, and enter the schedule to the calendar. The schedules such as the deadline displayed on the calendar screen 401 may be automatically updated when the user uploads the information to the chat room 302, for example.

In the intellectual property system 100, the schedules displayed on the calendar screen 401 are not limited to the schedules related to the intellectual property, and any schedules may be included as long as they are schedules of the user.

The main screen 301 may include an icon 306 corresponding to the folder function. The folder function is for storing the information on the procedures uploaded by the user to the chat room 302. When the user selects the icon 306 corresponding to the folder function, the user moves to a folder screen 501, which displays folders.

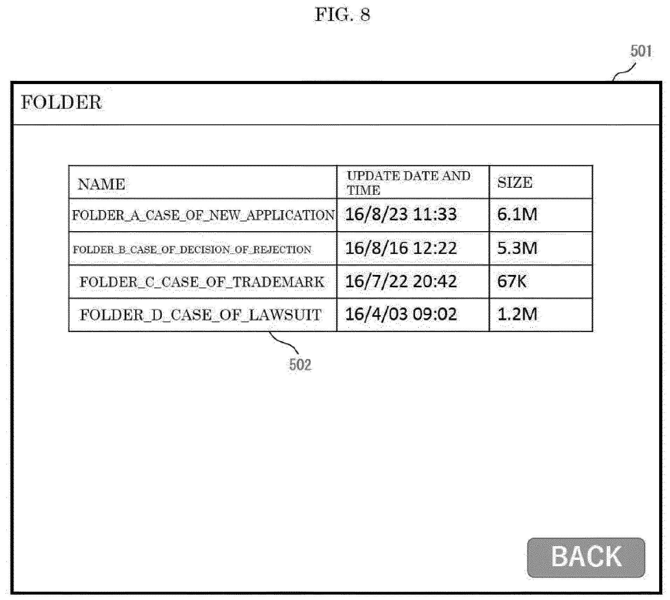

FIG. 8 is a schematic diagram illustrating a configuration example of the folder screen 501. As shown in FIG. 8, in the folder screen 501, a folder 502 in which various files are stored is displayed. For example, the folder "folder_A_case_of_new_application" stores files such as documents concerning a new application.

The folder screen 501 stores the name of the folder 502, the update date and time, which correspond to the time when the various files are registered in the folder 502, and the size of the files stored in the folder 502, which name, date and time, and size are associated with each other. The manager or the staff of the server device 1may determine and enter the name of the folder 502.

The files uploaded by the user or the foreign agent to the chat room 302 may be automatically stored in the folder. For example, the various information uploaded by the user in the chat room 302 titled New Application may be automatically stored in the folder 502 named New Application. The manager or the staff of the server device 1 may store the files uploaded by the user and the foreign agent to the chat room 302 and the name of the folder 502.

Also, the user and the foreign agent open the files stored in the folder 502 of the folder screen 501 and modify or change the contents. Further, the user and the foreign agent may upload the files to the chat room 302, or may designate the folder 502 on the folder screen 501 to store the files therein.

The main screen 301 may include an icon 307 corresponding to the translation function. As shown in FIG. 6, the main screen 301 includes Translation as the icon 307 corresponding to the translation function.

The translation function is for translating certain information uploaded by the user and the foreign agent. For example, when the user uploads a file described in Japanese to the chat room 302, it serves to translate the file into English or Chinese. Also, it serves to translate a file written in English or Chinese uploaded by the foreign agent to Japanese.

It is desirable that the translation function be capable of accurately translating expressions and contents specific to the intellectual property. The translation function may be, for example, a hybrid machine translation that combines a rule-based machine translation that translates certain expressions and contents based on a predetermined rule and a statistical machine translation that performs translation by statistically learning translation models based on a large number of translated sentences (such as example sentences and past translation results). The rule-based machine translation performs translation according to a combination of words and grammar, for example, enabling translation of contents with reduced mistranslation even in the field of the intellectual property including specific expressions. Further, the statistical machine translation performs translation based on the mechanically learned translation models, enabling translation of contents with reduced mistranslation even in various technical fields. The translation function in the intellectual property system 100 performs translation based on the hybrid machine translation, enabling translation of contents even on the intellectual property including the various technical fields and the field of law with reduced mistranslation.

The translation function may be performed not based on the machine learning but by a translator.

When the user identifies the file uploaded to the chat room 302 on the chat room 302 and selects the icon 307, the specified file is translated into a certain language. When the user selects the icon 307, further tabs and icons for selecting a language to be translated may be displayed. When the user selects the tab or the icon corresponding to the language that the user desires to translate, the specified file is translated into the selected language.

In the intellectual property system 100 according to the first embodiment of the present invention, for example, a translation service provided at a low price or free of charge may be used for the translation of the file.

In the first embodiment of the present invention, when the user or the foreign agent uploads the file to the chat room 302, the translation function may be automatically performed on the file.

The main screen 301 may include an icon 308 corresponding to each of a plurality of the foreign agents. The user selects the icon 308 and allows the foreign agent that the user requests the procedures to participate in the chat room 302 so that the user can exchange information with the foreign agent. The main screen 301 may include an icon 308 corresponding to each of a plurality of the foreign agents. The icons 308 that are not displayed on the main screen 301 are displayed by scrolling the area where the icons 308 are displayed on the main screen 301 by the user.

The icon 308 may display information on the agent. On the icon 308, for example, the name of the agent or the name of the patent firm or the law firm to which the agent belongs may be displayed. Further, for each agent, the icon 308 may display the costs in the case where the user requests the agent to perform the procedures, or the time needed for the procedures. This allows the user to check the costs and the time, for example, to select the agent that the user requests the procedures.

The intellectual property system may be configured such that clicking the icons 308 by the user to check detailed information on the agents allows the user to move to a page for checking the detailed information. The detailed information may include detailed contents of the patent firm and the law firm to which the agent belongs, the costs required for the procedures, and the career of the agent. For each of the agents, for example, the user can check the costs needed for the procedures and determine the agent to request the procedures. In contrast, the agent presents the costs of discounts, for example, so that the agent is selected by the user.

The main screen 301 may include an icon 309 corresponding to a function for a TV conference with the foreign agent. When the user specifies the icon 308 corresponding to the foreign agent that the user wishes to conduct the TV conference and selects the icon 309 corresponding to the TV conference, the user moves to the TV conference screen for conducting the TV conference with the specified foreign agent.

The TV conference with the foreign agent allows the user to directly obtain the explanation from the foreign agent concerning the contents on the procedures and the costs needed for the procedures.

Further, the main screen 301 may include an icon 310 corresponding to IP liaison and an icon 311 corresponding to flow of procedures as an option. The functions included in the option may be used only by the users that have paid for using the option, or may be available to all of the users.

The IP liaison is a service that draws out an invention from the inventor by asking the inventor certain questions. The IP liaison asks the inventor the certain questions such as "What is the feature of the invention?" and "What is the novel part of the invention?" and receives responses from the inventor to clarify the invention. The question to be given to the inventor in the IP liaison is not limited to these examples. Any questions may be used as long as the questions are to draw out the invention. The IP liaison asks the inventor various questions to clarify the invention to enable the patent application to be filed for the invention.

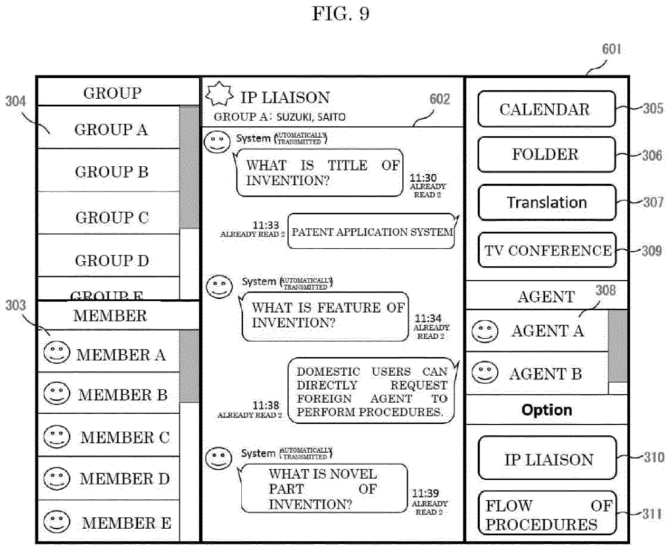

FIG. 9 is a schematic diagram illustrating a configuration example of a liaison screen 601 for providing the IP liaison function. As shown in FIG. 9, the liaison screen 601 includes a chat room 602 in which various questions related to the invention are made and the inventor responds to the questions. As shown in FIG. 9, the question to the inventor may be automatically made by the system or may be performed by the manager or the staff of the intellectual property system 100. The inventor as a user answers the questions displayed on the chat room 602. The answers from the inventor are automatically stored in the folder 502. The files stored in the folder 502 allows the inventor as a user to check the invention and perform certain procedures related to the patent application.

A plurality of inventors are allowed to participate in the chat room 602 shown in FIG. 9, and the invention is clarified by the inventors cooperatively answering the questions. Further, the answers from the inventor in the chat room 602 shown in FIG. 9 are stored in the folder 502 as well as the date and time, and the files stored in the folder 502 may also be used as a research note.

Further, the IP liaison function may be configured to perform the prior art document search based on the contents answered by the inventor. The server device 1 connects to various services that provide patent documents and articles, for example, via the NW 3 and performs the prior art document search based on the contents answered by the inventor. The server device 1 may automatically upload the found prior art documents to the chat room 602.

Further, the IP liaison function may indicate the relevance between the invention of the user and the found prior art documents by a tree map on the chat room 602 or another page. The tree map allows the user to obtain the relevance between the invention of the user and the related documents, examine the patentability of the invention of the user, and even improve the invention of the user in consideration of the related documents. The IP liaison function is not limited to show the relevance to the invention of the user. The IP liaison may display the relevance between the prior art documents. Further, the IP liaison function may display the relevance by methods other than the tree map.

Further, the IP liaison function displays the similarity between the invention of the user and the prior art documents as a distribution map. For example, the center of the map is defined as the invention of the user, and the higher similarity the prior art documents have, the closer positions to the center the prior art documents may be plotted. The map allows the user to check the similarity between the invention of the user and a plurality of the prior art documents. The map also allows the user to find, for example, existing patents and articles that are appropriate as the prior art documents of the invention of the user. The map also allows the user to check the prior art documents that are similar to the invention of the user to determine the patentability of the invention of the user. For example, when a number of plots are shown close to the center (invention of the user) in the map, the user determines that a number of prior documents close to the invention of the user exists. This allows the user to consider additional ideas for improving the patentability of the invention of the user. Further, in the case where less plots are shown at positions close to the center in the map, the user determines that less prior art documents that are similar to the invention of the user exists. This allows the user to consider filing a plurality of applications, and extend the scope of the invention of the application.

In addition, in the case where a plurality of the inventions of the user is provided, the IP liaison function defines the inventions of the user as a cluster and shows a map allowing a plurality of prior art documents (cluster of the prior art documents) close to the cluster of the invention of the user to be viewed.

Further, the IP liaison function may be configured to specify researchers that conduct the same research and development as those of the inventor from the information on the inventors participating in the chat room 602. The server device 1 connects through the NW3 to a service that provides information on the inventors and specifies, for example, the researchers that conduct the same research and development as those of the inventors participating in the chat room 602. The server device 1 may automatically upload the information on the specified researchers to the chat room 602.

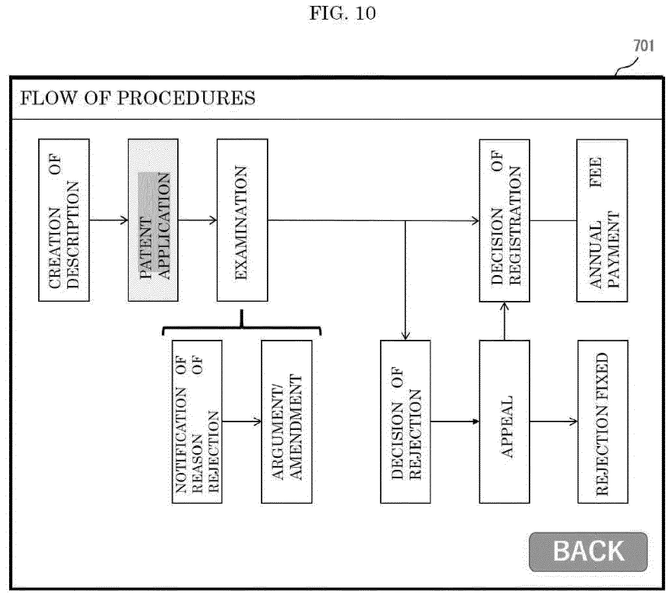

FIG. 10 is a flowchart schematically illustrating a configuration example of a procedure flow screen 701 for providing the function of the flow of the procedures. As shown in FIG. 10, the procedure flow screen 701 displays to which part of the entire procedures from filing the application to acquiring the patent right the procedure related to the user currently performed corresponds. As shown in FIG. 10, the procedure flow screen 701 includes the entire flow of the procedures, among which the background of the flow corresponding to the procedure currently being performed by the user is highlighted. This allows the user to check the position of the procedure currently performed in the entire flow of the procedures. Further, checking the procedure flow screen 701 allows the user to obtain the procedure to be performed next.

The procedure flow screen 701 is provided for each procedure related to the user. For example, when the user files a patent application and a trademark registration application, a procedure flow screen 701 of the patent application and a procedure flow screen 701 of the trademark registration application are provided.

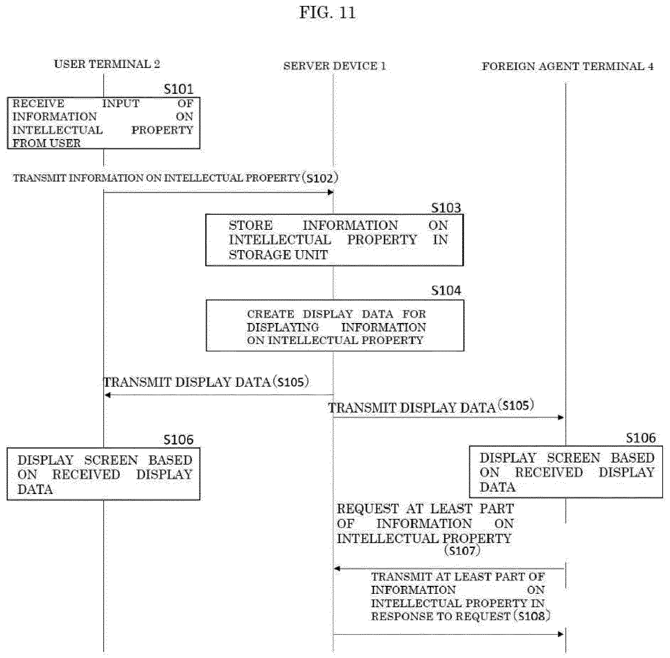

FIG. 11 is a sequence diagram illustrating an operation example of the intellectual property system 100 according to the first embodiment of the present invention.

As shown in FIG. 11, the operation receiving unit 27 of the user terminal 2 receives an operation from the user (step S101). The operation receiving unit 27 receives information on intellectual property, for example, from the user via a keyboard or a microphone.

The transmission processing unit 22 transmits the information on the intellectual property received from the user to the server device 1 (step S102). The information on the intellectual property may include a file in a certain format and text information, for example.

The storage processing unit 14 of the server device 1 stores the information on the intellectual property received from the user terminal 2 in the storage unit 15 (step S103).

Further, the generating unit 13 generates display data for displaying the information on the intellectual property (step S104). The generating unit 13, for example, generates display data for displaying a chat room including the information on the intellectual property. In the chat room, the user and the foreign agent exchange information with each other.

The processing unit 12 transmits the display data generated by the generating unit 13 through the communication unit 10 to the user terminal 2 and the agent terminal 4 (step S105).

The user terminal 2 and the agent terminal 4 display the display screen on the display unit based on the received display data (step S106). The user terminal 2 and the agent terminal 4 display the chat room based on the display data.

The agent terminal 4 requests at least a part of the information on the intellectual property to the server device 1 (step S107). When the foreign agent selects information to be downloaded in the displayed chat room, the agent terminal 4 may transmit the request to the server device 1.

In response to the request from the agent terminal 4, the processing unit 12 of the server device 1 transmits at least a part of the information on the intellectual property to the agent terminal 4 (step S108).

As described above, in the first embodiment of the present invention, the server device 1 transfers the information received from the user terminal 2 to the agent terminal 4. This allows the intellectual property system 100 to reduce the time and costs needed for the agent to obtain the information on the intellectual property procedures.

### Second Embodiment

The second embodiment of the present invention shows the case where a server device 1 searches for illegally uploaded moving images and notifies the user and the foreign agent of the search result.

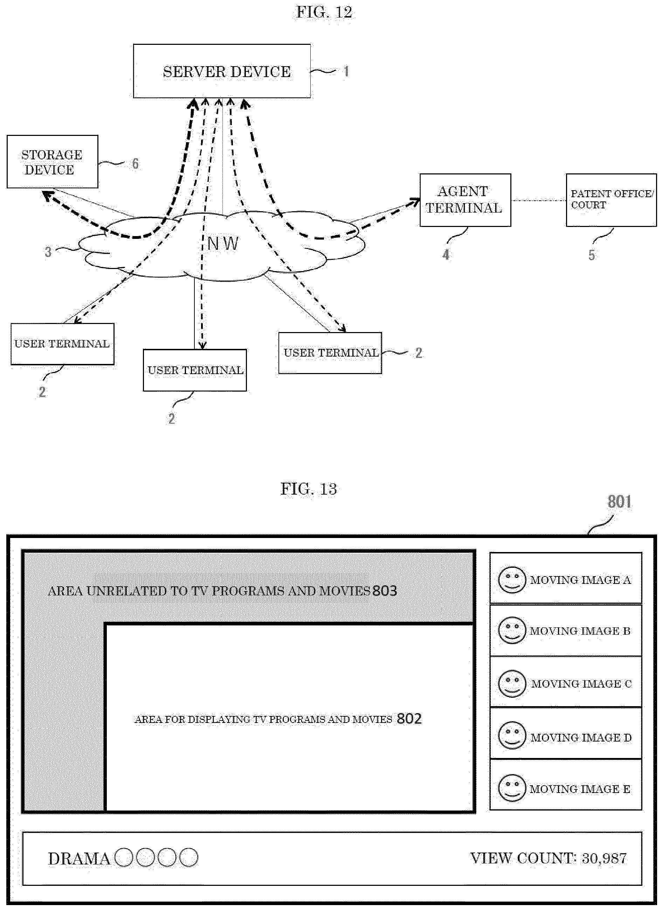

FIG. 12 is a diagram illustrating a configuration example of an intellectual property system 100 according to the second embodiment of the present invention. As shown in FIG. 12, the intellectual property system 100 includes a storage device 6, which stores illegally uploaded moving images. The intellectual property system 100 may include a plurality of storage devices 6.

The storage device 6 stores illegally uploaded TV programs and movies, for example. The storage device 6 may be provided in a country other than the country where the address or residence of the person that has uploaded the illegal moving image exists. The storage device 6 may store a plurality of illegally uploaded moving images.

The illegally uploaded TV programs and the movies are not uploaded as they are but are uploaded with certain modifications and changes.

FIG. 13 is a schematic diagram illustrating an example of an illegally uploaded moving image 801. As shown in FIG. 13, in the illegally uploaded moving image 801, for example, an area 803 that is not related to the TV programs and the movies is provided in the periphery of an area 802 for displaying the TV programs and the movies. Providing the area 803 that is not related to the TV programs and the movies prevents the illegally uploaded moving image from being consistent with the moving image shown on the area 802 for displaying the TV programs and the movies so that the moving image is hard to be detected. The TV programs and the movies 802 are provided at the lower right, the lower left, the upper right, the upper left, or the center of the illegally uploaded moving image 801. The area other than the area 802 for displaying the TV programs and movies corresponds to the area 803 that is not related to the TV programs and the movies.

Accordingly, in the second embodiment of the present invention, an illegally uploaded moving image is specified based on a change in color (color scheme) included in the TV programs and the movies.

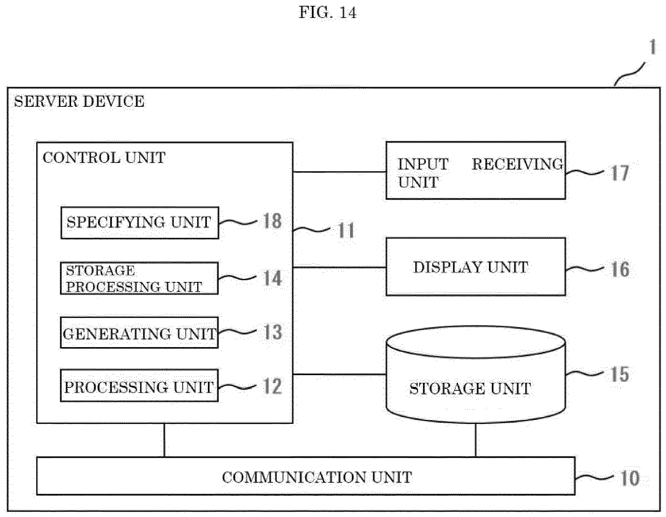

FIG. 14 is a diagram illustrating a configuration example of the server device 1 according to the second embodiment of the present invention. The control unit 11 of the server device 1 includes a specifying unit 18. The specifying unit 18 specifies the illegally uploaded moving image stored in the storage device 6 based on the information on the moving image provided by the user.

The information on the TV programs and the movies received from the user may include information on blending of colors (color scheme) included in the TV programs and the movies, for example. The information on the blending of colors may include information on the blending of colors included in the TV programs and the movies, for example. Further, the information on the blending of colors is, for example, a ratio of the blending of colors on the screen that displays the moving image. For example, the information on the blending of colors is the ratio of the blending of colors in the RGB color model. The information on the TV programs and the movies may also include information on sounds included in the TV programs and the movies, for example.

The specifying unit 18 specifies the illegally uploaded moving image by using the information on the blending of colors (color scheme) and the information on sounds provided by the user. The specifying unit 18, for example, specifies a moving image that includes the same blending of colors as the illegally uploaded moving image based on the information on the blending of colors (color scheme).

Further, the specifying unit 18 specifies a moving image that includes the same sounds as the illegally uploaded moving image based on the sounds included in the TV programs and the movies, for example. Even if the moving image includes the area 803 that is not related to the TV programs and the movies, the sounds of the moving image are the same as those included in the TV programs and the movies provided by the user, allowing the specifying unit 18 to identify the illegally uploaded moving image.

The information on the TV programs and the movies provided by the user may correspond to information on a change in color (color scheme) included in the TV programs and the movies, for example.

The specifying unit 18 specifies an illegally uploaded moving image using the change in color (color scheme) included in the TV programs and the movies or the sounds included in the TV programs and the movies provided by the user. The specifying unit 18 specifies a moving image including colors (color scheme) that change in the same manner as the illegally uploaded moving image based on the change in color (color scheme) included in the TV programs and the movies, for example. Even if the moving image includes the area 803 that is not related to the TV programs and the movies, the change in color (color scheme) of the area 802 that displays the TV programs and the movies is the same as the change in color (color scheme) included in the TV programs and the movies provided by the user, allowing the specifying unit 18 to identify the illegally uploaded moving image.

When the specifying unit 18 specifies the illegally uploaded moving image, the specifying unit 18 notifies the user terminal 2 and the agent terminal 4 of the information on the illegally uploaded moving image. For example, the specifying unit 18 notifies the user terminal 2 of the information on the illegally uploaded moving image. The information on the illegally uploaded moving image includes, for example, the URL of a page on which the illegally uploaded moving image is viewed. Also, the information on the illegally uploaded moving image may be an identifier (such as an IP address) capable of specifying the storage device 6 that stores the illegally uploaded moving image.

The user and the foreign agent that are notified of the information on the illegally uploaded moving image by the server device 1 request the manager that manages the storage device 6 to delete the illegally uploaded moving image. This also allows the user and the foreign agent to request a person that has illegally uploaded the moving image to delete the image or take a legal action on the person.

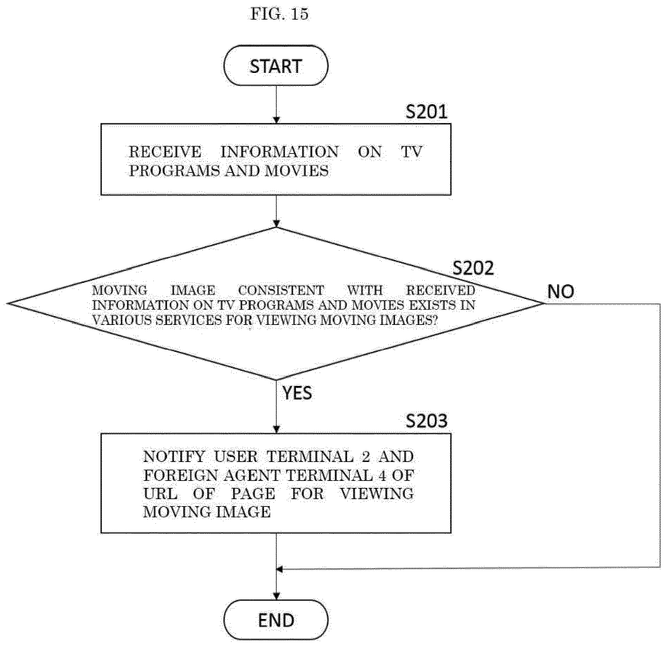

FIG. 15 is a flowchart illustrating an operation example of the server device 1 according to the second embodiment of the present invention.

As shown in FIG. 15, the specifying unit 18 of the server device 1 receives the information on the TV programs and the movies from the user terminal 2 via the communication unit 10 (step S201). The specifying unit 18, for example, receives the information on the change in color (color scheme) included in the TV programs and the movies from the user terminal 2 via the communication unit 10. Further, the specifying unit 18 receives, for example, the information on the sounds included in the TV programs and the movies from the user terminal 2 via the communication unit 10.

The specifying unit 18 connects to the storage device 6 that provides various services for viewing the moving image, and determines whether a moving image that is consistent with the information on the TV programs and the movies received from the user terminal 2 exists in the services provided by the storage device 6 (step S202). The specifying unit 18 determines, for example, the change in color (color scheme) in a moving image is consistent with the change in color (color scheme) included in the TV programs and the movies received from the user terminal 2 to specify whether such a moving image exists in the services provided by the storage device 6. The specifying unit 18 may determine, for example, the sounds in a moving image are consistent with the sounds included in the TV programs and the movies received from the user terminal 2 to specify whether such a moving image exists in the services provided by the storage device 6.

When a moving image that is consistent with the information on the TV programs and the movies received from the user terminal 2 exists in the services provided by the storage device 6 (YES in step S202), the specifying unit 18 notifies the user terminal 2 and the agent terminal 4 of the URL of the page for viewing the moving image and the identifier capable of identifying the storage device 6 via the communication unit 10 (step S203).

In contrast, if the moving image that is consistent with the information on the TV programs and the movies received from the user terminal 2 does not exist in the services provided by the storage device 6 (NO in step S202), the specifying unit 18 terminates the process.

The server device 1 may specify, based on the change in color (color scheme) included in the TV programs and the movies and the sounds included in the TV programs and the movies, whether the moving image that is consistent with the information on the TV programs and the movies received from the user terminal 2 exists in the services provided by the storage device 6.

When a plurality of storage devices 6 is provided, the server device 1 executes the processes in steps S201 to S203 on the storage devices 6 and specifies the illegally uploaded moving images.

As described above, in the second embodiment of the present invention, the server device 1 searches for an illegally uploaded moving image and notifies the user and the foreign agent of the search result. This allows the user and the foreign agent to request the person that has illegally uploaded the moving image to delete the image or take a legal action on the person.

Although the present invention is described with reference to the drawings and the embodiments, it should be noted that a person skilled in the art easily make various deformations and modifications based on the present disclosure. Therefore, it should be noted that the deformations and the modifications are included within the scope of the present invention. For example, the functions included in the means and the steps, for example, are rearrangeable as long as the functions are logically consistent with each other, and a plurality of means and steps may be combined together or divided. Further, the structures illustrated in the embodiments may be appropriately combined.

## Claims

1. A server device, comprising:
a communication unit configured to receive information on intellectual property transmitted from a user terminal operable by a user;
a generating unit configured to generate display data for displaying a chat room that allows the user and an agent to exchange information with each other; and
a processing unit configured to transmit the display data for displaying the chat room including the information on the intellectual property received by the communication unit to the user terminal via the communication unit, wherein
the processing unit notifies at least a part of the information on the intellectual property included in the chat room to an agent terminal operable by the agent via the communication unit.

2. The server device according to claim 1, further comprising an input receiving unit configured to receive a correction or an additional request for the information on the intellectual property from a manager capable of operating the server device, wherein the processing unit notifies the user terminal of the request received from the input receiving unit via the communication unit.

3. The server device according to claim 1 or 2, further comprising an input receiving unit configured to receive a deadline of the information on the intellectual property from a manager capable of operating the server device, wherein the generating unit generates display data for displaying the deadline received from the input receiving unit in a calendar capable of managing the deadline of the information on the intellectual property.

4. The server device according to any of claims 1 to 3, wherein the processing unit is configured to translate the information on the intellectual property into a certain foreign language on the basis of a certain rule in which an item specific to the information on the intellectual property is predetermined and a translation model that has statistically machine learned a past translation result.

5. The server device according to any of claims 1 to 4, wherein in a case where certain information on a moving image received from the user terminal in advance is consistent with information included in a certain moving image disclosed on a network, the processing unit notifies the user terminal of the certain information on the moving image.

6. The server device according to claim 5, wherein
the predetermined information corresponds to information on a change in color included in the moving image or information on a sound included in the moving image, and
when the certain moving image published on the network includes the information on the change in color included in the moving image or the information on the sound included in the moving image, the processing unit notifies the user terminal of the information on the certain moving images.

7. The server device according to any of claims 1 to 6, wherein the processing unit is capable of creating information on the intellectual property based on a question asked by the manager that is capable of operating the server device and an answer of the user to the question on the chat room.

8. The server device according to any of claims 1 to 7, wherein the processing unit searches for a prior art document related to the information on the intellectual property on the basis of the information on the intellectual property received from the user terminal, and the generating unit generates display data for displaying a relevance between the prior art document searched by the processing unit and the information on the intellectual property on a map.

9. The server device according to any of claims 1 to 8, wherein the generating unit is configured to generate display data for displaying certain information set by each of a plurality of agents, and the processing unit is configured to notify at least a part of the information on the intellectual property to an agent terminal operable by one of the agents selected by the user based on the certain information.

10. A communication method comprising the steps of:
a first step of receiving information on intellectual property transmitted from a user terminal operable by a user;
a second step of generating display data for displaying a chat room allowing the user and an agent to exchange information with each other;
a third step of transmitting display data for displaying the chat room including the received information on the intellectual property to the user terminal; and
a fourth step of notifying at least a part of the information on the intellectual property included in the chat room to an agent terminal operable by the agent.

11. A program causing a computer to execute:
a first function of receiving information on intellectual property transmitted from a user terminal operable by a user;
a second function of generating display data for displaying a chat room allowing the user and an agent to exchange information with each other;
a third function of transmitting display data for displaying the chat room including the received information on the intellectual property to the user terminal; and
a fourth function of notifying at least a part of the information on the intellectual property included in the chat room to an agent terminal operable by the agent.
